# EUROPÄISCHE PATENTSCHRIFT

(11) **EP 0 548 201 B1**
(45) Veröffentlichungstag und Bekanntmachung des Hinweises auf die Patenterteilung: **17.08.1994**
(21) Anmeldenummer: 91916574.6
(22) Anmeldetag: 18.09.1991
(51) Int. Cl.: B62D 5/22, B62D 5/30, B62D 5/12

(54) **ZAHNSTANGEN-HILFSKRAFTLENKUNG FÜR - INSBESONDERE SCHWERE - KRAFTFAHRZEUGE**
POWER-ASSISTED RACK-AND-PINION STEERING FOR MOTOR VEHICLES, IN PARTICULAR HEAVY VEHICLES
DIRECTION ASSISTEE A CREMAILLERE POUR VEHICULES AUTOMOBILES, EN PARTICULIER POUR VEHICULES LOURDS

(30) Priorität: 21.09.1990 DE 4029906
(43) Veröffentlichungstag der Anmeldung: 30.06.1993
(73) Patentinhaber: ZAHNRADFABRIK FRIEDRICHSHAFEN AG, 88015 Friedrichshafen (DE)
(72) Erfinder: LINDE, Joachim, D-7076 Waldstetten (DE); ELSER, Dieter, D-7087 Essingen (DE)
(86) Internationale Anmeldenummer: EP9101776
(87) Internationale Veröffentlichungsnummer: WO9205061

(56) Entgegenhaltungen:
- EP-A- 0 188 158
- GB-A- 1 295 433
- PATENT ABSTRACTS OF JAPAN, Band 011, Nr. 086 (M-572), 17. Mäez 1987
- PATENT ABSTRACTS OF JAPAN, Band 010, Nr. 291 (M-522), 3. Oktober 1986

## Beschreibung

Die Erfindung betrifft eine Zahnstangen- Hilfskraftlenkung für - insbesondere schwere - Kraftfahrzeuge, nach dem Oberbegriff des Anspruches 1. Dabei sind zur Hilfskraftunterstützung zwei hydraulisch voneinander getrennte Lenkkreise vorgesehen, die je eine Zylinder-Kolben-Einheit enthalten. Die beiden Zylinder-Kolben-Einheiten sind mechanisch miteinander verbunden und parallel zueinander angeordnet. Eine der Zylinder-Kolben-Einheiten steht mit einem Abtriebsgestänge in Verbindung, das zur Übertragung der Lenkbewegung von der Zahnstange auf die zu lenkenden Fahrzeugräder ausgebildet ist.

Zahnstangen-Hilfskraftlenkungen können in Ein-Kreis-Ausführung für schwere Nutzfahrzeuge nur bis zu einer Lenkachslast von ca. 6 500 kg verwendet werden, da bestimmte Forderungen des Gesetzgebers (z. B. § 38 StVZO) zu erfüllen sind. Diese Grenze ergibt sich durch das systembedingte direkte Gesamt-Übersetzungverhältnis von Zahnstangen- Milfskraftlenkungen. Für Kraftfahrzeuge, deren Lenkachslasten 6 500 kg übersteigen, sind Zahnstangen- EIilfskraftlenkungen mit zwei hydraulisch voneinander getrennten Lenkkreisen erforderlich.

Eine derartige Zahnstangen-Hilfskraftlenkung ist beispielsweise bekannt aus der EP-A-0 188 158. In dieser Zahnstangen-Hilfskraftlenkung sind zwei Zylinder-Kolben-Einheiten parallel nebeneinander angeordnet. Die beiden Zylinder-Kolben-Einheiten sind durch eine elastische Kupplung miteinander verbunden, die zwischen den beiden axial verschiebbaren Zylindern angeordnet ist. Eine derartige Ausführung erfordert einen hohen Herstellungs- und Montageaufwand. Die Stelle, an der die Verbindungsteile von der Zahnstange zu den zu lenkenden Fahrzeugrädern aus dem Gehäuse heraustreten, ist durch eine gleitende Abdichtung abgedichtet. Eine solche gleitende Abdichtung kann bei starker Verschmutzung, wie sie im Bereich eines Lenkgetriebes auftritt, zu Schwierigkeiten führen.

Der Erfindung liegt die Aufgabe zugrunde, eine Zahnstangen-Hilfskraftlenkung mit zwei hydraulisch voneinander getrennten Lenkkreisen der eingangs beschriebenen Art derart zu verbessern, daß die bisher vorliegenden Nachteile vermieden werden. Insbesondere sollen leichter herzustellende und zu montierende Teile verwendet werden, die zusätzlich einen Austausch erlauben, damit unterschiedliche Varianten erzielt werden können. Außerdem soll die Abdichtung der einzelnen Teile gegenüber der Außenumgebung verbessert werden.

Diese Aufgabe wird durch die im Anspruch 1 gekennzeichnete Zahnstangen-Hilfskraftlenkung gelöst. Zweckmäßige und vorteilhafte Ausgestaltungen sind in den Unteransprüchen angegeben.

Zur Lösung der Aufgabe gehört es, daß das Lenkgehäuse durch den Zylinder der ersten Zylinder-Kolben-Einheit verlängert und mit diesem und einem zylindrischen Fortsatz in ein Hauptgehäuse eingeschoben wird. In dem Hauptgehäuse ist der Zylinder der zweiten Zylinder-Kolben-Einheit angeordnet. Die Kolbenstangen der beiden Zylinder-Kolben-Einheiten sind durch ein Joch miteinander verbunden.

Das Lenkgehäuse mit Ritzel und Zahnstange und mit der in axialer Richtung daran angeordneten ersten Zylinder-Kolben-Einheit kann einer serienmäßigen einkreisigen Zahnstangen-Hilfskraftlenkung entnommen werden. Der Zylinderdurchmesser der zweiten Zylinder-Kolben-Einheit kann leicht durch Änderung des Durchmessers der Einschubbohrung oder eines Einschubzylinders variiert werden.

Werden die Zahnstange und die Kolbenstange der ersten Zylinder-Kolben-Einheit fest miteinander verbunden und folgt auch die Verbindung der Kolbenstangen der beiden Zylinder-Kolben-Einheiten durch ein festes Joch, so ergibt sich insgesamt eine sehr starre spielfreie Verbindung.

Im folgenden wird die Erfindung anhand zweier in der Zeichnung dargestellter Ausführungsbeispiele näher erläutert. Es zeigen
- Fig. 1: einen Längsschnitt durch die erfindungsgemäße Zahnstangen-Hilfskraftlenkung mit einem schematisch dargestellten Schaltplan der beiden Lenkkreise und
- Fig. 2: einen Teil-Längsschnitt gemäß Fig. 1 mit einem zweiten Ausführungsbeispiel der zweiten Zylinder-Kolben-Einheit.

Bei der erfindungsgemäßen Zahnstangen- Hilfskraftlenkung ist in einem Lenkgehäuse 1 ein Ritzel 2 drehbar gelagert. Mit dem Ritzel 2 steht eine Zahnstange 3 in Kämmeingriff.

Mit der Zahnstange 3 fest verbunden ist eine Kolbenstange 4 einer ersten Zylinder-Kolben-Einheit 5, die im wesentlichen aus einem Zylinder 6 und einem Kolben 7 besteht. Der Zylinder 6 ist mit dem Lenkgehäuse 1 fest verbunden. Ihre Längsachsen fluchten miteinander. Der Zylinder 6 ist zweckmäßigerweise in eine Axialbohrung 8 des Lenkgehäuses 1 eingepreßt.

Das Lenkgehäuse 1 weist in Längsrichtung einen zylindrischen Fortsatz 9 auf. Mit dem Fortsatz 9 und mit dem Zylinder 6 der ersten Zylinder-Kolben-Einheit 5 ist das Lenkgehäuse 1 in Bohrungen 10 und 11 eines Hauptgehäuses 12 eingeschoben.

Parallel zur Längsachse der Zahnstange 3 und der ersten Zylinder-Kolben-Einheit 5 ist in dem Hauptgehäuse 12 eine zweite Zylinder-Kolben-Einheit 13 angeordnet. Diese besteht im wesentlichen aus einem Zylinder 14 und einem Kolben 15 mit einer Kolbenstange 16. Die Kolbenstange 16 ist über ein nur schematisch dargestelltes Lenkgestänge 17, 18 mit den zu lenkenden Fahrzeugrädern 19 verbunden. Die Kolbenstange 4 ist mit der Kolbenstange 16 durch ein Joch 20 verbunden.

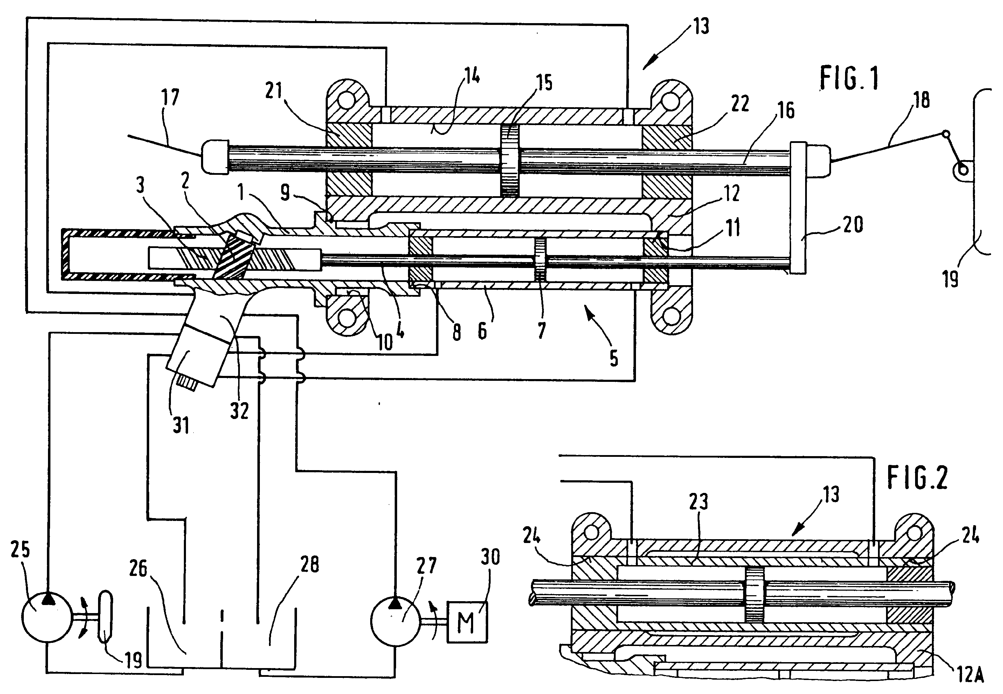

In dem in Fig. 1 dargestellten Ausführungsbeispiel ist der Zylinder 14 direkt als Bohrung des Hauptgehäuses 12 ausgebildet, die mit zwei Zylinderdeckeln 21 und 22 verschlossen ist.

In dem Ausführungsbeispiel gemäß Fig. 2 ist der Zylinder der zweiten Zylinder-Kolben-Einheit 13 als Einschubzylinder 23 ausgebildet, der in wenigstens eine Aufnahmebohrung 24 des Hauptgehäuses 12A eingeschoben ist. Der Innendurchmesser des Einschubzylinders 23 kann leicht variiert werden, so daß bei gleichem Hauptgehäuse 12A unterschiedliche Größen der zweiten Zylinder-Kolben-Einheit 13 verwirklicht werden können.

Die erste Zylinder-Kolben-Einheit 5 kann ebenso leicht variiert werden, z. B. indem man unterschiedliche vorhandene Standard-Zylinder 6 mit zugehörigen Kolben 7 in die im Durchmesser geänderten Bohrungen 8 und 11 des Lenkgehäuses 1 bzw. des Hauptgehäuses 12 einsetzt. Dabei können gleiche Gußrohlinge für die Lenkgehäuse 1 und für die Hauptgehäuse 12 verwendet werden.

Die erste Zylinder-Kolben-Einheit 5 wird von einer Pumpe 25 aus einem Druckmittelbehälter 26 mit Druckmittel versorgt. Die Pumpe 25 ist als Notlenkpumpe ausgebildet, die vom Antriebsstrang des Kraftfahrzeuges angetrieben wird. Die zweite Zylinder-Kolben-Einheit 13 wird von einer Pumpe 27 aus einem Druckmittelbehälter 28 mit Druckmittel versorgt. Die Pumpe 27 wird von einem Fahrzeugmotor 30 angetrieben. Die Steuerung des Druckmittels zu und von den beiden Zylinder-Kolben-Einheiten 5 und 13 erfolgt über Druckmittelleitungen durch zwei Steuerventile 31 und 32, die zweckmäßigerweise an dem Lenkgehäuse 1 angeordnet sind.

Das Lenkgehäuse 1 ist um seine Längsachse in dem Hauptgehäuse 12 in dem Maße begrenzt schwenkbar, das die Druckmittelleitungen zu und von den Steuerventilen 31 und 32 erlauben. Dadurch können unterschiedliche Einbauverhältnisse im Kraftfahrzeug leicht berücksichtigt werden.

Das Lenkgehäuse 1 läßt sich sowohl links als auch rechts an das Hauptgehäuse 12 anbauen. Dadurch ergeben sich auf einfache Weise Ausführungen für Links- und für Rechtslenker.

### Bezugszeichen

- 1: Lenkgehäuse
- 2: Ritzel
- 3: Zahnstange
- 4: Kolbenstange
- 5: Zylinder-Kolben-Einheit
- 6: Zylinder
- 7: Kolben
- 8: Axialbohrung
- 9: zylindrischer Fortsatz
- 10: Bohrung
- 11: Bohrung
- 12, 12A: Hauptgehäuse
- 13: Zylinder-Kolben-Einheit
- 14: Zylinder
- 15: Kolben
- 16: Kolbenstange
- 17: Lenkgestänge
- 18: Lenkgestänge
- 19: Fahrzeugrad
- 20: Joch
- 21: Zylinderdeckel
- 22: Zylinderdeckel
- 23: Einschubzylinder
- 24: Aufnahmebohrung
- 25: Pumpe
- 26: Druckmittelbehälter
- 27: Pumpe
- 28: Druckmittelbehälter
- 29: -
- 30: Fahrzeugmotor
- 31: Steuerventil
- 32: Steuerventil

## Patentansprüche

1. Zahnstangen-Hilfskraftlenkung für - insbesondere schwere - Kraftfahrzeuge mit folgenden Merkmalen:
- in einem Lenkgehäuse (1) ist ein Ritzel (2) drehbar gelagert;
- mit dem Ritzel (2) steht eine in dem Lenkgehäuse (1) axial verschiebbar geführte Zahnstange (3) in Eingriff;
- zur Hilfskraft-Unterstützung sind zwei hydraulisch voneinander getrennte Lenkkreise vorgesehen, die je eine Zylinder-Kolben-Einheit (5, 13) enthalten;
- die Zylinder-Kolben-Einheiten (5, 13) sind mechanisch miteinander verbunden und parallel zueinander angeordnet;
- eine der Zylinder-Kolben-Einheiten (13) steht mit einem Lenkgestänge (17, 18) in Verbindung, das zur Übertragung der Lenkbewegung von der Zahnstange (3) auf die zu lenkenden Fahrzeugräder (19) ausgebildet ist,
**gekennzeichnet** durch folgende Merkmale:
- das Lenkgehäuse (1) ist durch den Zylinder (6) der ersten Zylinder-Kolben-Einheit (5) verlängert und mit diesem und einem zylindrischen Fortsatz (9) in ein Hauptgehäuse (12) eingeschoben;
- in dem Hauptgehäuse (12) ist der Zylinder (14) der zweiten Zylinder-Kolben-Einheit (13) angeordnet;
- die Kolbenstangen (4, 16) der beiden Zylinder-Kolben-Einheiten (5, 13) sind durch ein Joch (20) miteinander verbunden.

2. Zahnstangen-Hilfskraftlenkung nach Anspruch 1, dadurch **gekennzeichnet**, daß der Zylinder (14) der zweiten Zylinder-Kolben-Einheit (13) direkt in dem Hauptgehäuse (12) ausgebildet ist.

3. Zahnstangen-Hilfskraftlenkung nach Anspruch 1, dadurch **gekennzeichnet**, daß der Zylinder (14) der zweiten Zylinder-Kolben-Einheit (13) als Einschubzylinder (23) ausgebildet ist, der in wenigstens eine Aufnahmebohrung (24) des Hauptgehäuses (12A) eingesetzt ist.

4. Zahnstangen-Hilfskraftlenkung nach Anspruch 1, dadurch **gekennzeichnet,** daß die Zahnstange (3) mit der Kolbenstange (4) der ersten Zylinder-Kolben-Einheit (5) fest verbunden ist.

5. Zahnstangen-Hilfskraftlenkung nach Anspruch 1, dadurch **gekennzeichnet**, daß die wirksame Kolbenfläche der zweiten Zylinder-Kolben-Einheit (13) größer ist als die der ersten (5).

6. Zahnstangen-Hilfskraftlenkung nach Anspruch 5, dadurch **gekennzeichnet**, daß die zweite Zylinder-Kolben-Einheit (13) von einer durch den Fahrzeugmotor (30) angetriebenen Pumpe (27) und die erste Zylinder-Kolben-Einheit (5) von einer vom Antriebsstrang des Kraftfahrzeuges angetriebenen Pumpe (25) mit Druckmittel versorgt werden.

7. Zahnstangen-Hilfskraftlenkung nach Anspruch 1, dadurch **gekennzeichnet**, daß das Lenkgehäuse (1) um seine Längsachse in dem Hauptgehäuse (12) begrenzt schwenkbar ist.

8. Zahnstangen-Hilfskraftlenkung nach Anspruch 1, dadurch **gekennzeichnet**, daß der Zylinder (6) der ersten Zylinder-Kolben-Einheit (5) als Einschubzylinder ausgebildet ist, der in eine Axialbohrung (8) des Lenkgehäuses (1) und in eine Bohrung (11) des Hauptgehäuses (12) eingesetzt ist.

## Claims

1. Power-assisted rack-and-pinion steering, which is intended in particular for heavy motor vehicles, with the following characteristics:
- a pinion gear (2) is mounted for rotational motion in a steering housing (1);
- a rack (3), which is mounted for translational motion in the steering housing (1), engages with the pinion (2);
- two independent hydraulic steering circuits for power assistance, each containing a piston-and-cylinder unit (5, 13);
- the piston-and-cylinder units (5, 13) are mechanically connected to one another, and are disposed in parallel to each other;
- one of the piston-and-cylinder units (13) is connected to a steering linkage (17, 18) which is designed to transmit the steering movement from the rack (3) to the steered vehicle wheels (19),
**characterized** in that,
- the cylinder (6) of the first piston-and-cylinder unit (5) forms an extension to the steering housing (1), and the steering housing together with the first piston-and-cylinder unit and a cylindrical shoulder (9) project into the main housing (12);
- the cylinder (14) of the second piston-and-cylinder unit (13) is fitted in the main housing (12);
- the piston rods (4, 16) of the piston-and-cylinder units (5, 13) are connected to each other by a yoke (20).

2. Power-assisted rack-and-pinion steering in accordance with Claim 1, **characterized** in that, the cylinder (14) of the second piston-and-cylinder unit (13) is formed directly into the main housing (12).

3. Power-assisted rack-and-pinion steering in accordance with Claim 1, **characterized** in that, the cylinder (14) of the second piston-and-cylinder unit (13) is designed as a bushing cylinder (23) which is inserted in at least one insertion bore (24) in the main housing (12A).

4. Power-assisted rack-and-pinion steering in accordance with Claim 1, **characterized** in that, the rack (3) is fixed onto the piston rod (4) of the first piston-and-cylinder unit.

5. Power-assisted rack-and-pinion steering in accordance with Claim 1, **characterized** in that, the effective piston area of the second piston-and-cylinder unit (13) is larger than the first (5).

6. Power-assisted rack-and-pinion steering in accordance with Claim 5, **characterized** in that, the second piston-and-cylinder unit (13) is supplied with pressurized fluid by a pump (27) driven off the vehicle engine (30), and that a pump (25) driven off the motor vehicle driveline provides pressurized fluid to the first piston-and-cylinder unit (5).

7. Power-assisted rack-and-pinion steering in accordance with Claim 1, **characterized** in that, the steering housing (1) can swivel to a limited degree about its longitudinal axis within the main housing (12).

8. Power-assisted rack-and-pinion steering in accordance with Claim 1, **characterized** in that, the cylinder (6) of the first piston-and-cylinder unit (5) is designed as a bushing cylinder which is inserted in an axial bore (8) in the steering housing (1) and a bore (11) in the main housing (12).

## Revendications

1. Direction assistée à crémaillère pour des véhicules particulièrement lourds, présentant les caractéristiques suivantes:
- un pignon (2) est logé de façon rotative dans un boîtier de direction (1)
- une crémaillère (3) guidée de façon à pouvoir être déplacée dans le sens axial dans le boîtier de direction (1), est en prise avec le pignon (2);
- pour l'assistance hydraulique, on a prévu deux circuits de direction séparés hydrauliquement et contenant chacun une unité vérin-piston (5, 13);
- les unités vérin-piston (5,13) sont reliées entre elles de façon mécanique et disposées parallèlement;
- l'une des unités vérin-piston (13) est reliée à une tringlerie de direction (17, 18) réalisée pour transmettre le mouvement de braquage de la crémaillère (3) aux roues du véhicule (19) qui doivent être braquées,
**caractérisé** par les propriétés suivantes:
- le boîtier de direction (1) est prolongé par le vérin (6) de la première unité vérin-piston (5) et emboîté avec celui-ci et un prolongement cylindrique (9) dans un carter principal (12);
- le vérin (14) de la deuxième unité vérin-piston (13) est installé dans le carter principal (12);
- les tiges de piston (4, 16) des deux unités vérin-piston (5, 13) sont reliées entre elles par une traverse (20).

2. Direction assistée à crémaillère selon la revendication 1, **caractérisée** en ce que le vérin (14) de la deuxième unité vérin-piston (13) est réalisé directement dans le carter principal (12).

3. Direction assistée à crémaillère selon la revendication 1, **caractérisée** en ce que le vérin (14) de la deuxième unité vérin-piston (13) est réalisé sous forme de vérin enfichable (23) mis en place dans au moins un alésage de positionnement (24) du carter principal (12A).

4. Direction assistée à crémaillère selon la revendication 1, **caractérisée** en ce que la crémaillère (3) est reliée fixement avec la tige de piston (4) de la première unité vérin-piston (5).

5. Direction assistée à crémaillère selon la revendication 1, **caractérisée** en ce que la surface de piston active de la deuxième unité vérin- piston (13) est plus grande que celle de la première (5).

6. Direction assistée à crémaillère selon la revendication 5, **caractérisée** en ce que la deuxième unité vérin-piston (13) est alimentée en agent de pression par une pompe (27) entraînée par le moteur du véhicule (30) et en ce que la première unité vérin-piston (5) l'est par une pompe (25) entraînée par la chaîne cinématique du véhicule.

7. Direction assistée à crémaillère selon revendication 1, **caractérisée** en ce que le boîtier de direction (1) est pivotable de façon limitée sur son axe longitudinal dans le carter principal (12).

8. Direction assistée à crémaillère selon la revendication 1, **caractérisée** en ce que le vérin (6) de la première unité vérin-piston (5) est réalisé sous forme de vérin enfichable placé dans un alésage axial (8) du boîtier de direction (1) et dans un alésage (11) du carter principal (12).
